# EUROPÄISCHE PATENTSCHRIFT

(11) **EP 3 619 781 B1**
(45) Veröffentlichungstag und Bekanntmachung des Hinweises auf die Patenterteilung: **17.03.2021**
(21) Anmeldenummer: 19725317.2
(22) Anmeldetag: 15.05.2019
(51) Int. Cl.: H02G 15/013, H01H 37/00, H05K 5/00

(54) **ELEKTRO-BAUTEIL UND VERFAHREN ZU DESSEN HERSTELLUNG**
ELECTRICAL COMPONENT AND METHOD FOR PRODUCING IT
COMPOSANT ÉLECTRIQUE ET PROCÉDÉ POUR SA FABRICATION

(30) Priorität: 16.05.2018 DE 102018111712
(43) Veröffentlichungstag der Anmeldung: 11.03.2020
(73) Patentinhaber: Kolektor Group d.o.o., 5280 Idrija (SI)
(72) Erfinder: DRMOTA PETRIC, Ana, 5280 Idrija (SI); KUMAR, Ludvik, 1371 Logatec (SI)
(74) Vertreter: Grättinger Möhring von Poschinger Patentanwälte Partnerschaft mbB
(86) Internationale Anmeldenummer: PCT/EP2019/062458
(87) Internationale Veröffentlichungsnummer: WO 2019/219738

(56) Entgegenhaltungen:
- WO-A1-2012/107545
- DE-A1-102008 061 926
- DE-A1-102010 036 324
- DE-B4-102011 107 110

## Beschreibung

Die vorliegende Erfindung betrifft ein Elektro-Bauteil umfassend mindestens ein elektrisches Kabel und eine mit diesem endseitig unlösbar verbundene elektrische Funktionseinheit, wobei das elektrische Kabel mindestens einem metallischen Leiter und eine den mindestens einen Leiter umgebende Kunststoff-Isolierumhüllung aufweist und die elektrische Funktionseinheit ein an die Kunststoff-Isolierumhüllung des Kabels angespritztes Isolator-Gehäuse und mindestens ein darin aufgenommenes, mit dem mindestens einen Leiter kontaktiertes elektrisches Funktionselement umfasst. Weiterhin betrifft die vorliegende Erfindung ein Verfahren zur Herstellung eines derartigen Elektro-Bauteils.

Elektro-Bauteile der vorstehend angegeben gattungsgemäßen Art zählen in diversen Ausgestaltungen zum Stand der Technik. Sie unterscheiden sich namentlich hinsichtlich der jeweiligen elektrischen Funktionseinheit. Das zugehörige elektrische Funktionselement kann beispielsweise als Sensor bzw. Aufnehmer, als Schalter, als Signal- bzw. Anzeigeelement, als Elektronikbaustein, als Kontaktstecker bzw. -buchse, oder dergleichen ausgeführt sein. DE 102011107110 B4 offenbart ein als Kontaktstecker ausgeführtes gattungsgemäßes Elektro-Bauteil. Auf der Kunststoff-Isolierumhüllung der Kabel ist eine zusätzliche Ummantelung angeordnet und stoffschlüssig mit der Kunststoff-Isolierumhüllung verbunden. Das Isolator-Gehäuse ist aus Kunststoff gefertigt und stoffschlüssig mit der zusätzlichen Ummantelung verbunden. Zur Unterstützung der Ausbildung der stoffschlüssigen Verbindungen wird vorgeschlagen, die Oberflächen der Kunststoff-Isolierumhüllung sowie der zusätzlichen Ummantelung mechanisch durch Sandstrahlbearbeitung aufzurauen oder alternativ durch chemische Aktivierung zu bearbeiten.

Die DE 10 2011 107 110 B4 offenbart ein mit einem Schutzgehäuse versehenes elektrisches Bauteil, an welchem zwei Anschlussflächen für den elektrischen Anschluss von Anschlusskabeln vorgesehen sind, die mit einem flexiblen Kunststoffmantel versehen und mit ihren ersten Enden elektrisch mit den Anschlussflächen verbunden sind. Mit ihren zweiten Enden ragen die Anschlusskabel durch eine Kabeldurchführung aus dem Schutzgehäuse heraus. Auf dem Kunststoffmantel der Anschlusskabel ist über einer ersten Länge eine zusätzliche Ummantelung angeordnet und stoffschlüssig mit dem Kunststoffmantel verbunden. Die Kabeldurchführung ist aus Kunststoff gefertigt und über eine zweite Länge stoffschlüssig mit der zusätzlichen Ummantelung verbunden.

Aus der WO 2012/107 545 A1 sind ein Metallteil und ein Verfahren zur Herstellung eines Metallteils bekannt. Das Metallteil ist/wird mit einer Umspritzung aus einem Kunststoffmaterial bereichsweise umgeben. Es weist im Laufe seiner axialen Erstreckung zumindest eine quer zu der axialen Erstreckung ausgerichtete Prägung auf.

Die Bedingungen, unter denen gattungsgemäße Elektro-Bauteile Anwendung finden, können sich stark voneinander unterscheiden. Teilweise unterliegen die Elektro-Bauteile im Betrieb besonderen Beanspruchungen. Hierzu zählen beispielsweise besonders hohe und/oder niedrige Temperaturen, ebenso wie starke Vibrationen oder sonstige mechanische Erschütterungen. Weiterhin kann die Anwesenheit von Dämpfen und/oder Flüssigkeiten in der Umgebung des Elektro-Bauteils Probleme verursachen wie beispielsweise eine verborgene Korrosion im Bereich der Kontaktierung von Leiter und elektrischem Funktionselement. Bei Ausfall einer technischen Einrichtung mit einem solchermaßen geschädigten Elektro-Bauteil kann die Fehlersuche extrem aufwändig sein. Und bei sicherheitsrelevanten technischen Einrichtungen kann der auf ein solchermaßen geschädigtes Elektro-Bauteil zurückgehende Ausfall selbst teilweise ganz erhebliche Risiken bergen.

Die vorliegende Erfindung hat zur Aufgabe, ein im Hinblick auf die beim Stand der Technik anzutreffende, vorstehend dargelegte Problematik verbessertes Elektro-Bauteil bereitzustellen.

Gelöst wird diese Aufgabenstellung erfindungsgemäß dadurch, dass bei einem Elektro-Bauteil der gattungsgemäßen Art die Kunststoff-Isolierumhüllung des Kabels im Bereich einer durch das Isolator-Gehäuse der elektrischen Funktionseinheit abgedeckten Ringzone auf ihrer Außenfläche umlaufend mittels einer Laserbearbeitung dergestalt strukturiert ist, dass sie ein Rillenmuster und zwischen den Rillen verbliebene Erhebungen aufweist, wobei das Isolator-Gehäuse ein bei dessen Spritzgießen durch das Rillenmuster der Isolier-Umhüllung geformtes und zu diesem korrespondierendes Stegmuster mit dergestalt in die Rillen eintretenden und dort verankerten Stegen aufweist, dass das Isolator-Gehäuse und die Kunststoff-Isolierumhüllung in der Ringzone gegenüber flüssigen Medien dauerhaft gegeneinander abgedichtet sind. In verfahrensmäßiger Hinsicht besteht die vorliegende Erfindung demgemäß, wie in Anspruch 17 angegeben, in einem Verfahren zum Herstellen eines Elektro-Bauteils, welches sich durch die folgenden Schritte auszeichnet: Bereitstellen mindestens eines mindestens einen metallischen Leiter und eine den mindestens einen Leiter umgebende Kunststoff-Isolierumhüllung aufweisenden elektrischen Kabels; Strukturieren der Kunststoff-Isolierumhüllung des Kabels benachbart einem der Kabelenden auf ihrer Außenfläche im Bereich einer Ringzone umlaufend mittels einer Laserbearbeitung dergestalt, dass sie ein Rillenmuster und zwischen den Rillen verbliebene Erhebungen aufweist; Herstellen eines Zwischenprodukts durch elektrisches Kontaktieren mindestens eines elektrischen Funktionselements mit dem Ende mindestens eines Leiters des Kabels; Einlegen des Zwischenprodukts mit dem elektrischen Funktionselement und einem sich daran anschließenden, die Ringzone mit dem Rillenmuster auf der Kunststoff-Isolierumhüllung aufweisenden Abschnitt des Kabels in ein Spritzgießwerkzeug; Herstellen einer unlösbar mit dem Kabel verbundenen elektrischen Funktionseinheit durch Anspritzen eines das mindestens eine elektrische Funktionselement aufnehmenden Isolator-Gehäuses an das Kabelende, wobei beim Spritzgießen des Isolator-Gehäuses an diesem durch das Rillenmuster der Isolier-Umhüllung des Kabels ein zu diesem korrespondierendes Stegmuster mit dergestalt in die Rillen eintretenden und dort verankerten Stegen geformt wird, dass das Isolator-Gehäuse und die Kunststoff-Isolierumhüllung in der Ringzone gegenüber flüssigen Medien dauerhaft gegeneinander abgedichtet sind.

In Anwendung der vorliegenden Erfindung lässt sich durch synergetisches Zusammenwirken der Gesamtheit der für die erfindungsgemäßen Elektro-Bauteile in Verbindung miteinander charakteristischen Merkmale ein gegenüber dem Stand der Technik substantiell reduziertes Ausfallrisiko der betreffenden Elektro-Bauteile erreichen. Denn dass die an der Kunststoff-Isolierumhüllung des Kabels an dessen Oberfläche - zwischen den Rillen des durch Laserbearbeitung hergestellten Rillenmusters - verbliebenen Erhebungen, wie dies bei erfindungsgemäßen Elektro-Bauteilen regelmäßig der Fall ist, allseits durch die besagten Rillen begrenzt sind, begünstigt die Bildung eines langlebig-hochwirksamen Dichtungslabyrinths selbst dann, wenn sich infolge der Verschiedenheit der zur Herstellung der Kunststoff-Isolierumhüllung einerseits und zur Herstellung des Isolier-Gehäuses anderseits verwendeten Materialien beim Spritzgießen des Isolier-Gehäuses keine stoffschlüssige Verbindung erreichen lässt.

Als entscheidend hierfür lassen sich Effekte ansehen, welche mit der erfindungsgemäßen Laser-Strukturierung der Oberfläche der Isolier-Umhüllung des mindestens einen elektrischen Kabels in Verbindung stehen. Denn durch eben jene Laserbearbeitung können sehr scharfkantige Rillen mit äußerst geringen Eckradien ausgebildet werden. Das an den scharfen Kanten der Rillen exponierte, vorspringende Kunststoff-Isolierumhüllungs-Material ist während des Anspritzens des Isolator-Gehäuses der Hitzeeinwirkung der heißen Kunststoffschmelze des Isolator-Gehäuses ganz besonders ausgesetzt und wird somit mit einem steilen Gradienten stärker erhitzt als der Rest der Kunststoff-Isolierumhüllung. So kann es zu einem definierten rapiden lokalen Aufschmelzen des Kunststoff-Isolierumhüllungs-Materials im Bereich der - gewissermaßen ähnlich wie Kristallisationskeime wirkenden - scharfen Kanten der Rillen kommen, wodurch es dort zur Ausbildung von stoffschlüssigen Verbindungen mit dem Isolator-GehäuseMaterial kommen kann. Diese gemäß dem Rillenmuster über den Umfang des mindestens einen Kabels verteilten Zonen einer stoffschlüssigen Verbindung zwischen der Isolierumhüllung des mindestens einen elektrischen Kabels und dem Isolator-Gehäuse können eine Bewegung dieser Teile relativ zueinander wirksam unterbinden. Dies kommt einer dauerhaften hochwirksamen Dichtigkeit des - zwischen den Rillen des Rillenmusters und den in diese eingespritzten Stegen des Stegmusters bestehenden - Dichtungslabyrinths - ohne eine vollflächige stoffschlüssige Verbindung zwischen der Isolierumhüllung des mindestens einen elektrischen Kabels und dem Isolator-Gehäuse - entgegen. Letzteres ist der Zuverlässigkeit des elektrischen Bauteils insoweit zuträglich, als ein großflächiges und/oder tiefes Aufschmelzen der Kunststoff-Isolierumhüllung des mindestens einen Kabels durchaus problematisch sein kann, weil durch unkontrolliertes Aufschmelzen die Integrität der Kunststoff-Isolierumhüllung geschädigt werden kann, was äußerstenfalls - insbesondere bei mehradrigen Kabeln - das Risiko von Kurzschlüssen und Fehlströmen nach sich ziehen kann. Mit dem vorstehenden Muster lässt sich auch erklären, weshalb selbst dann, wenn - im Hinblick auf die spezifischen Anforderungen: flexibles Kabel, aber hartes Isolator-Gehäuse - die Isolierumhüllung des mindestens einen elektrischen Kabels einerseits und das Isolator-Gehäuse andererseits aus zwei Kunststoffen mit grundlegend unterschiedlichen Materialeigenschaften bestehen, sich in Anwendung der vorliegenden Erfindung sehr gute Ergebnisse erzielen lassen.

Namentlich wird bei Elektro-Bauteilen, welche in einer Feuchtigkeit und/oder sonstige Dämpfe (z. B. Öldämpfe, Kraftstoffdämpfe, oder dergleichen) enthaltenden Umgebung zum Einsatz kommen, das Risiko der Entstehung verborgener Korrosion im Bereich der Kontaktierung von Leiter und elektrischem Funktionselement substantiell reduziert. Die Lebensdauer und die Ausfallsicherheit der über solche Elektro-Bauteile verfügenden technischen Einrichtungen wird erhöht. Die Anzahl aufwändiger Fehlersuchen und Instandsetzungen nimmt ab.

Gemäß einer ersten bevorzugten Weiterbildung der Erfindung sind an dem Umfang der Kunstsoff-Isolierumhüllung Rillen vorgesehen, welche sich ringförmig geschlossen über den Umfang der Isolier-Umhüllung erstrecken. Die ringförmig geschlossen umlaufenden Rillen können dabei beispielsweise gewellt sein. Aber auch ungewellte ringförmig geschlossen umlaufenden Rillen können ihren Zweck voll und ganz erfüllen.

Eine besonders bevorzugte Weiterbildung der Erfindung zeichnet sich dadurch aus, dass das Rillenmuster einander kreuzende Rillen umfasst. Besonders bevorzugt kreuzen die Rillen einander dabei unter Winkeln zwischen 60° und 120°. Hierdurch ergibt sich eine für deren Funktion besonders geeignete Geometrie der zwischen den Rillen verbleibenden Erhebungen. Sind im vorstehenden Sinne ringförmig geschlossen umlaufenden Rillen vorgesehen, so können die diese kreuzenden Rillen sich in mehr oder weniger axialer Richtung des Kabels erstrecken, so dass die Rillen einander unter etwa 90°-Winkeln kreuzen. Gemäß einer anderen besonders bevorzugten Ausgestaltung sind die einander kreuzenden Rillen des Rillenmusters durch sich mit unterschiedlichem Schraubsinn, d. h. teilweise mit Links- und teilweise mit Rechtsverschraubung, schraubenlinienförmig entlang der Oberfläche der Kunststoff-Isolierumhüllung erstreckende Rillen gebildet. Die Steigung ist dabei bevorzugt so gewählt, dass sich rautenförmige Erhebungen ergebenden, deren Erstreckung in Umfangsrichtung größer ist als in axialer Richtung. Besonders günstig sind Verhältnisse der Erstreckung in Umfangsrichtung zu der in axialer Richtung zwischen etwa 1,5 und 4, insbesondere zwischen 2 und 3.

Gemäß einer wiederum anderen bevorzugten Weiterbildung der Erfindung beträgt die Tiefe der Rillen zwischen 5% und 75% der mittleren Dicke des Kunststoff-Isolierumhüllung, insbesondere zwischen 10% und 60%. Besonders vorteilhaft ist eine Tiefe der Rillen zwischen 15% und 45% der mittleren Dicke des Kunststoff-Isolierumhüllung. So ergeben sich optimale Verhältnisse hinsichtlich der verschiedenen Anforderungen, insbesondere der dauerhaft festen und dichten formschlüssigen Verankerung des Isolator-Gehäuses an dem Kabel bei weiterhin hinreichender Integrität von dessen Kunststoff-Isolierumhüllung. In diesem Zusammenhang kann sich als sehr günstig erweisen, wenn - über die axiale Erstreckung des Rillenmusters betrachtet - die Rillen unterschiedlich tief ausgeführt sind. Insbesondere kann dabei die mittlere Tiefe der Rillen in Richtung auf das nächstliegende Ende des Kabels zunehmen. So werden der Dauerfestigkeit abträgliche Kerbwirkungen in der Kunststoff-Isolierumhüllung des Kabels reduziert, ohne dass die dauerhaft feste und dichte formschlüssige Verankerung des Isolator-Gehäuses an dem Kabel darunter leidet.

Was die Erstreckung der von dem Rillenmuster eingenommenen - Ringzone angeht, so hat sich für übliche Anwendungsfälle als vorteilhaft erwiesen, wenn die axiale Breite der Ringzone zwischen dem 0,3-fachen und dem 3-fachen Wert des Durchmessers der Kunststoff-Isolierumhüllung beträgt. Besonders günstig ist es, wenn die axiale Breite der Ringzone zwischen dem 0,5-fachen und dem 2-fachen Wert des Durchmessers der Kunststoff-Isolierumhüllung beträgt. In diesem Falle lässt sich das Ergebnis einer dauerhaft mediendichten formschlüssigen Verankerung des Isolator-Gehäuses an dem Kabel mit geringstmöglichem Aufwand erreichen.

Die Erfindung lässt sich im Zusammenhang mit einer großen Bandbreite an Werkstoffpaarungen für die Kunststoff-Isolierumhüllung einerseits und das Isolator-Gehäuse der elektrischen Funktionseinheit andererseits erfolgreich umsetzen. Insbesondere kann die Kunststoff-Isolierumhüllung aus einem auf PVC, XPE, PA, FEP, ETFE, PP, PUR, TPE-E TPE-SEBS, PFA, E/VAC oder Abkömmlingen hiervon basierenden Material und das Isolator-Gehäuse der elektrischen Funktionseinheit aus einem thermoplastischen oder einem wärmehärtbaren Material bestehen. Auch hinsichtlich der Ausführung des Kabels im Übrigen bestehen für die Anwendung bzw. Umsetzung der vorliegenden Erfindung keine Beschränkungen. So kann das Kabel einadrig ausgeführt sein, wobei der metallische Leiter direkt in die Kunststoff-Isolierumhüllung eingebettet ist. Ebenso kann aber auch das Kabel mehradrig ausgeführt sein, wobei die Kunststoff-Isolierumhüllung mehrere jeweils von einem individuellen Isoliermantel umgebene metallische Leiter umgibt. In diesem Falle sind bevorzugt zusätzlich zu der Kunststoff-Isolierumhüllung auch die Isoliermäntel mit einem Rillenmuster versehen. Demnach ragt bei dieser besonders bevorzugten Weiterbildung bei dem Kabel mindestens ein Isoliermantel aus der Kunststoff-Isolierumhüllung heraus, wobei der betreffende Isoliermantel im Bereich einer durch das Isolator-Gehäuse der elektrischen Funktionseinheit abgedeckten Ringzone auf seiner Außenfläche umlaufend mittels einer Laserbearbeitung dergestalt strukturiert ist, dass er ein Rillenmuster und zwischen den Rillen verbliebene Erhebungen aufweist, wobei das Isolator-Gehäuse ein bei dessen Spritzgießen durch das Rillenmuster des Isoliermantel geformtes und zu diesem korrespondierendes Stegmuster mit in die Rillen eintretenden und dort verankerten Stegen aufweist.

Im Folgenden wird die vorliegende Erfindung anhand der Zeichnung näher erläutert. Dabei zeigt
- Fig. 1: ein Elektro-Bauteil gemäß einem bevorzugten Ausführungsbeispiel der vorliegenden Erfindung,
- Fig. 2: ein zur Herstellung des Elektro-Bauteils nach Fig. 1 verwendetes Zwischenprodukt,
- Fig. 3: das vorbereitete Ende eines der Kabel des Elektro-Bauteils nach Fig. 1,
- Fig. 4: eine erste Abwandlung zu dem in Fig. 3 gezeigten Kabelende,
- Fig. 5: eine zweite Abwandlung zu dem in Fig. 3 gezeigten Kabelende,
- Fig. 6: eine dritte Abwandlung zu dem in Fig. 3 gezeigten Kabelende,
- Fig. 7: einen Längsschnitt durch das Kabelende nach einer vierten Abandlung und
- Fig. 8: die Umsetzung der Erfindung an einem doppelt isolierten einadrigen Kabel.

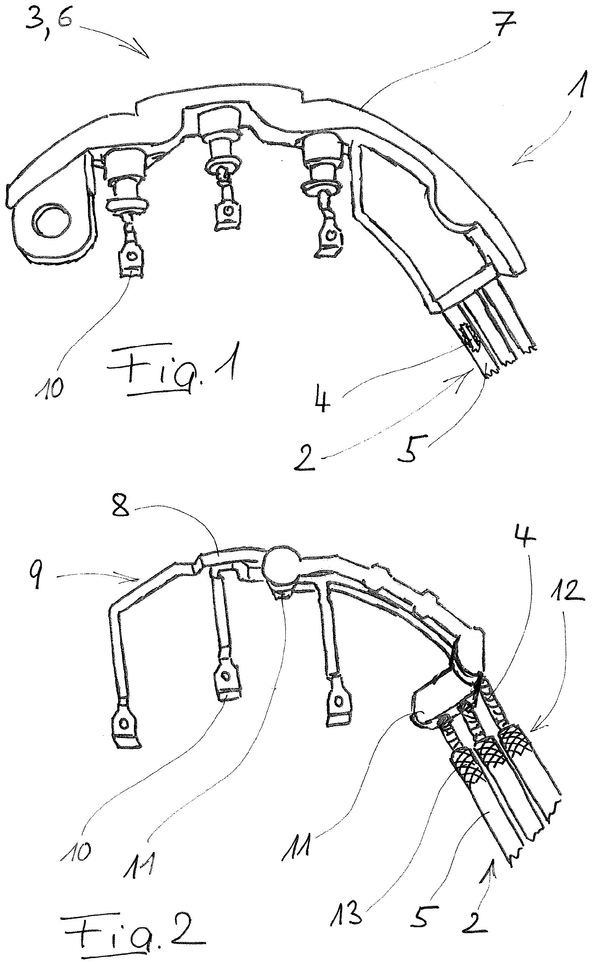

Das in Fig. 1 gezeigte Elektro-Bauteil 1 umfasst drei elektrische Kabel 2 und eine mit diesen endseitig unlösbar verbundene elektrische Funktionseinheit 3. Jedes der drei (einadrigen) elektrischen Kabel 2 weist einem metallischen Leiter 4 und eine diesen umgebende Kunststoff-Isolierumhüllung 5 auf. Die als elektrische Anschlusseinheit 6 ausgeführte elektrische Funktionseinheit 3 umfasst ein Isolator-Gehäuse 7 und drei darin eingebettete, gegeneiner isolierte streifenförmige Leiterbleche 8 (vgl. Fig. 2). Diese bilden elektrische Funktionselemente 9 und sind jeweils an ihrem einen Ende elektrisch leitend mit dem Leiter 4 eines jeweils zugeordneten Kabels 2 kontaktiert. Am gegenüberliegenden Ende bilden die Leiterbleche 8 jeweils eine - aus dem Isolator-Gehäuse 7 herausragende - Anschlussfahne (Kontaktfahne) 10 aus.

Das Elektro-Bauteil 1 nach Fig. 1 ist dabei aus dem in Fig. 2 veranschaulichten Zwischenprodukt hervorgegangen, und zwar - nach Einlegen des Zwischenprodukts in ein entsprechendes Spritzgießwerkzeug - durch Spritzgießen des Isolator-Gehäuses 7. Dabei werden die Leiterbleche 8 (mit Ausnahme der Anschlussfahnen 9) samt ihrer Kontaktierungen mit den Leitern 4 der Kabel 2 sowie jeweils ein Endabschnitt der Isolier-Umhüllungen 5 der drei Kabel 2 umspritzt; d. h. das Isolator-Gehäuse 7 wird (auch) an die Kunststoff-Isolierumhüllung 5 der drei Kabel 2 angespritzt. Zur Lagesicherung der Leiterbleche 8 während des bestreffenden Spritzgießprozesses, d. h. um die Leiterbleche 8 zuverlässig auf Abstand zueinander zu halten, sind bei dem in das Spritzgießwerkzeug einzulegenden Zwischenprodukt ("Einleger") gemäß Fig. 2 die Leiterbleche 8 über zwei Distanzstücke 11, welche ebenfalls mit umspritzt und hierdurch in das Isolator-Gehäuse 7 eingebettet werden, relativ zueinander positioniert.

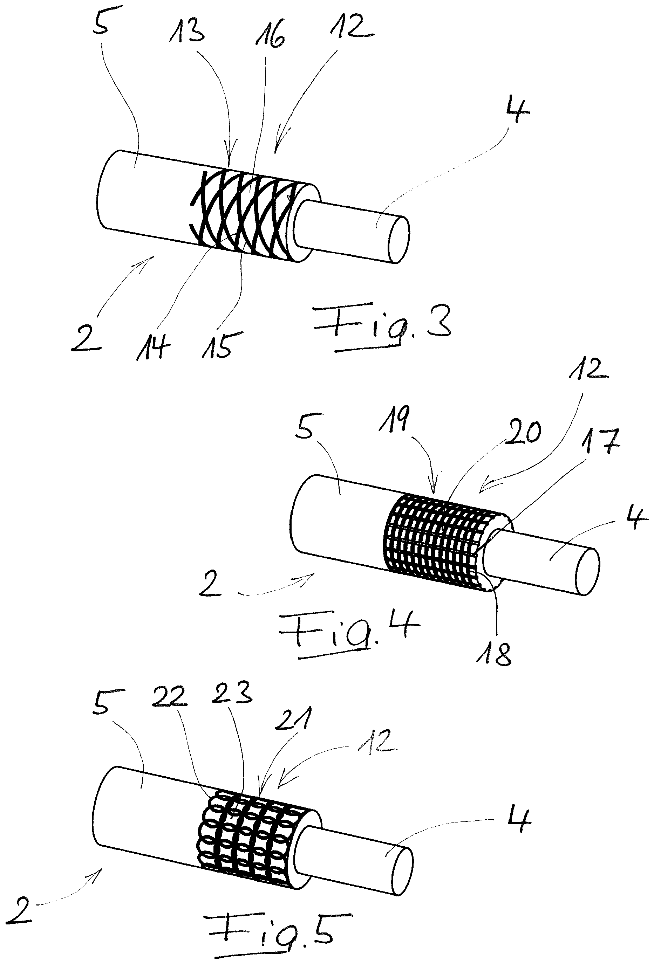

Im Bereich der durch das Isolator-Gehäuse 7 der elektrischen Anschlusseinheit 6 jeweils abgedeckten Ringzone 12 sind die Kunststoff-Isolierumhüllungen 5 der drei Kabel 2 auf ihrer Außenfläche umlaufend mittels einer Laserbearbeitung strukturiert, und zwar dergestalt, dass die jeweilige Außenfläche ein Rillenmuster 13 und zwischen den Rillen 14, 15 verbliebene Erhebungen 16 aufweist (vgl. Fig. 3). Dabei umfasst das Rillenmuster 13 einander mit unterschiedlichem Schraubsinn kreuzende Rillen, indem sowohl mit Linksverschraubung (Rillen 14) als auch mit Rechtsverschraubung (Rillen 15) sich schraubenlinienförmig entlang der Oberfläche der Kunststoff-Isolierumhüllung 5 erstreckende Rillen vorgesehen sind. Die Steigung der Rillen-Schraubenlinien ist dabei so gewählt, dass bei den sich ergebenden rautenförmigen Erhebungen 16 die Erstreckung in Umfangsrichtung etwa 2,5-fach so groß ist wie die Erstreckung in axialer Richtung. Die Tiefe der Rillen 14, 15 beträgt dabei etwa 30% der mittleren Dicke der Kunststoff-Isolierumhüllung 5. Die axiale Erstreckung der mittels des Rillenmusters strukturierten Ringzone 12 ist etwa 2-fach so groß wie der Durchmesser des jeweiligen Kabels 2.

Beim Spritzgießen des Isolator-Gehäuses 7 (s. o.) entstehen an diesem drei durch das Rillenmuster 13 der jeweiligen Kunststoff-Isolierumhüllung 5 geformte und zu diesem korrespondierende Stegmuster mit dergestalt in die Rillen 14, 15 eintretenden und dort verankerten Stegen, dass das Isolator-Gehäuse 7 und die Kunststoff-Isolierumhüllungen 5 der drei Kabel 2 in den drei Ringzonen 12 gegenüber flüssigen Medien dauerhaft gegeneinander abgedichtet sind.

Bei der in Fig. 4 veranschaulichten Ausführungsform sind die einander kreuzenden Rillen 17, 18 des Rillenmusters 19 gegenüber dem vorstehend erläuterten ersten Ausführungsbeispiel anders orientiert. Hier sind einerseits sich axial erstreckende Rillen 17 und andererseits sich im Umfangsrichtung erstreckende Rillen 18 vorgesehen. Die Rillen des Rillenmusters 19 kreuzen einander somit unter 90°-Winkeln. Und die verbleibenden Erhebungen 20 haben eine rechteckige Kontur. Durch die hier gewählte Beabstandung der Rillen 17 bzw. 18 untereinander ist wiederum die Erstreckung der Erhebungen 20 in Umfangsrichtung größer als ihre Erstreckung in axialer Richtung.

Bei der in Fig. 5 veranschaulichten Ausführungsform weist das in die Kunststoff-Isolierumhüllung 5 eingebrachte Rillenmuster 21 eine Vielzahl kreisförmig ausgeführter Rillen 22 auf. Die betreffenden Kreisrillen 22 schneiden bzw. durchdringen einander, wodurch ein korrespondierendes Muster an stehen gebliebenen Erhebungen 23 entsteht.

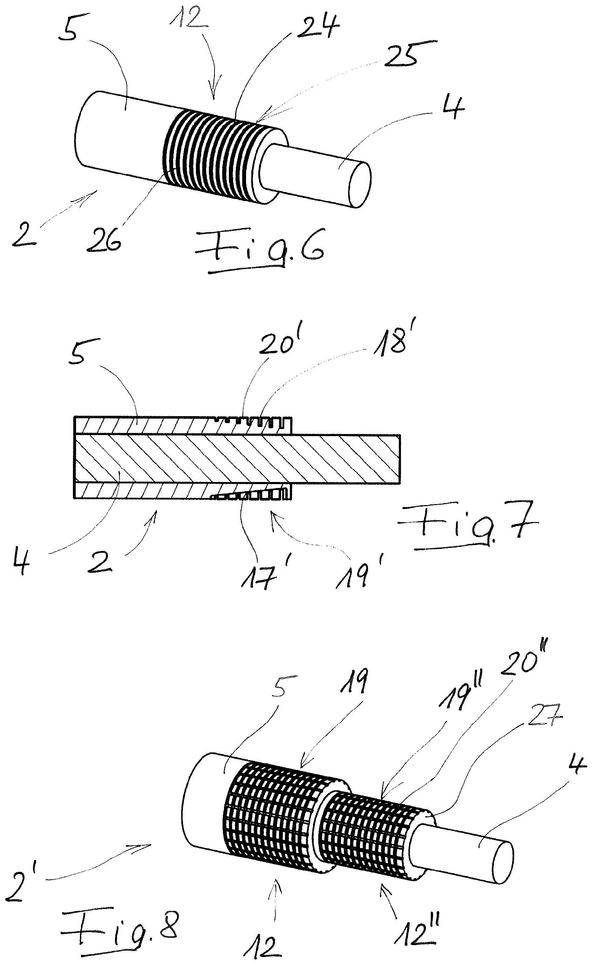

Bei der in den Fig. 6 veranschaulichten Ausführungsform sind parallel zueinander sich ringförmig geschlossen über den Umfang der Kunststoff-Isolierumhüllung 5 erstreckende Rillen 24 vorgesehen. Insoweit ähnelt hier das Rillenmuster 25 demjenigen nach Fig. 4, allerdings unter Weglassung der axial orientierten Rillen. Hierdurch ergeben sich - zwischen jeweils zwei einander benachbarten Rillen 24 - sich über den Umfang der Kunststoff-Isolierumhüllung 5 ringförmig geschlossen erstreckende Erhebungen 26.

Fig. 7 veranschaulicht beispielhaft im Zusammenhang mit einem der Ausführungsform nach Fig. 4 ähnelnden Rillenmuster 19', dass die Rillen unterschiedlich tief ausgeführt bzw. eine sich ändernde Tiefe aufweisen können. Und zwar ändert sich hier die Tiefe der sich axial erstreckenden Rillen 17' dergestalt, dass diese in Richtung auf das nächstliegende Ende des Kabels 2 zunimmt. Und die sich ringförmig im Umfangsrichtung erstreckenden Rillen 18' weisen unterschiedliche Tiefen auf dergestalt, dass die Tiefe in Richtung auf das nächstliegende Ende des Kabels 2 von Ringrille 18' zu Ringrille 18' zunimmt. Dementsprechend nimmt (auch) die relative Höhe der - durch die Rillen 17' und 18' begrenzten - Erhebungen 20' in Richtung auf das nächstliegende Ende des Kabels 2 zu. Vergleichbares lässt sich bei Rillen von beliebiger anderer Geometrie, beispielsweise bei den in den anderen Figuren der Zeichnung veranschaulichten weiteren Rillenmustern realisieren.

Fig. 8 zeigt - beispielhaft anhand eines Rillenmusters analog dem aus Fig. 4 - eine bevorzugte Umsetzung der vorliegenden Erfindung bei einem eine Doppelisolierung aufweisenden Kabel 2'. Und zwar werden hier bevorzugt sowohl die (äußere) Kunststoff-Isolierumhüllung 5 als auch der (innere) Isoliermantel (Überzug) 27 jeweils mit einem mittels Laserbearbeitung hergestellten Rillenmuster 19, 19" strukturiert. Und das an das Kabel 2' anzuspritzende Isolator-Gehäuse deckt nicht nur - in einer entsprechenden Ringzone 12 - die Kunststoff-Isolierumhüllung 5 ab, sondern vielmehr, in einer weiteren Ringzone 12", auch den aus dieser heraustretenden Isoliermantel 27; das Isolator-Gehäuse wird somit, mit anderen Worten, unter Herstellung einer doppelten Abdichtung sowohl an die Kunststoff-Isolierumhüllung 5 als auch an den Isoliermantel 27 angespritzt. Das Rillenmuster 19" des Isoliermantels 27 kann dabei, wie gezeigt, in geometrischer Hinsicht demjenigen der Kunststoff-Isolierumhüllung 5 entsprechen. Dies ist aber keinesfalls zwingend; vielmehr ist eine individuelle Anpassung der beiden Rillenmuster an die jeweiligen spezifischen Belastungen und Beanspruchungen - auch unter Berücksichtigung der jeweiligen Materialpaarung - möglich und sinnvoll.

Entsprechend dem Ausführungsbeispiel nach Fig. 8 wird zweckmäßigerweise bei Verwendung eines mehradrigen Kabels verfahren. In diesem Fall sind somit bevorzugt - zusätzlich zu der für sämtliche Adern gemeinsamen Kunststoff-Isolierumhüllung - die aus dieser heraustretenden, den einzelnen Adern zugeordneten individuellen Isoliermäntel jeweils im Bereich einer durch das Isolator-Gehäuse der elektrischen Funktionseinheit abgedeckten Ringzone auf ihrer Außenfläche umlaufend mittels einer Laserbearbeitung dergestalt strukturiert, dass sie ein Rillenmuster und zwischen den Rillen verbliebene Erhebungen aufweisen, wobei das Isolator-Gehäuse bei dessen Spritzgießen durch die Rillenmuster der Isoliermäntel geformte und zu diesen korrespondierende Stegmuster mit in die Rillen eintretenden und dort verankerten Stegen aufweist. Allerdings ist infolge der leichteren Herstellbarkeit und höheren Zuverlässigkeit bei Elektro-Bauteilen, bei denen die elektrische Funktionseinheit an mehrere Leiter anzuschließen ist, die in den Figuren 1 und 2 veranschaulichte Ausführung mit mehreren (ggf. mehrfach isolierten) einadrigen Kabeln zu bevorzugen gegenüber der Verwendung eines mehradrigen Kabels.

## Patentansprüche

1. Elektro-Bauteil (1) umfassend mindestens ein elektrisches Kabel (2, 2') und eine mit diesem endseitig unlösbar verbundene elektrische Funktionseinheit (3), wobei das elektrische Kabel (2, 2') mindestens einem metallischen Leiter (4) und eine den mindestens einen Leiter (4) umgebende Kunststoff-Isolierumhüllung (5) aufweist und die elektrische Funktionseinheit (3) ein an die Kunststoff-Isolierumhüllung (5) des Kabels (2, 2') angespritztes Isolator-Gehäuse (7) und mindestens ein darin aufgenommenes, mit dem mindestens einen Leiter (4) kontaktiertes elektrisches Funktionselement (9) umfasst, **dadurch gekennzeichnet, dass** die Kunststoff-Isolierumhüllung (5) des Kabels (2, 2') im Bereich einer durch das Isolator-Gehäuse (7) der elektrischen Funktionseinheit (3) abgedeckten Ringzone (12) auf ihrer Außenfläche umlaufend mittels einer Laserbearbeitung dergestalt strukturiert ist, dass sie ein Rillenmuster (13, 19, 21, 25) und zwischen den Rillen (14, 15; 17, 18; 17', 18'; 22; 24) verbliebene Erhebungen (16; 20; 20'; 23) aufweist, wobei das Isolator-Gehäuse (7) ein bei dessen Spritzgießen durch das Rillenmuster (13, 19, 21, 25) der Isolier-Umhüllung (5) geformtes und zu diesem korrespondierendes Stegmuster mit dergestalt in die Rillen (14, 15; 17, 18; 17', 18'; 22; 24) eintretenden und dort verankerten Stegen aufweist, dass das Isolator-Gehäuse (7) und die Kunststoff-Isolierumhüllung (5) in der Ringzone (12) gegenüber flüssigen Medien dauerhaft gegeneinander abgedichtet sind.

2. Elektro-Bauteil nach Anspruch 1, **dadurch gekennzeichnet, dass** sich ringförmig geschlossen über den Umfang der Isolier-Umhüllung (5) erstreckende Rillen (18; 18'; 24) vorgesehen sind.

3. Elektro-Bauteil nach Anspruch 1 oder Anspruch 2, **dadurch gekennzeichnet, dass** einander kreuzende Rillen (14, 15; 17, 18; 17', 18') vorgesehen sind.

4. Elektro-Bauteil nach Anspruch 3, **dadurch gekennzeichnet, dass** die Rillen (14, 15; 17, 18; 17', 18') einander unter Winkeln zwischen 60° und 120° kreuzen

5. Elektro-Bauteil nach einem der Ansprüche 1 bis 4, **dadurch gekennzeichnet, dass** die Tiefe der Rillen (14, 15; 17, 18; 17', 18'; 22; 24) zwischen 5% und 75%, bevorzugt zwischen 10% und 60%, besonders bevorzugt zwischen 15% und 45% der mittleren Dicke der Kunststoff-Isolierumhüllung (5) beträgt.

6. Elektro-Bauteil nach einem der Ansprüchl 1 bis 5, **dadurch gekennzeichnet, dass** die Rillen (17', 18') unterschiedlich tief ausgeführt sind.

7. Elektro-Bauteil nach Anspruch 6, **dadurch gekennzeichnet, dass** die mittlere Tiefe der Rillen (17', 18') in Richtung auf das nächstliegende Ende des Kabels (2) zunimmt.

8. Elektro-Bauteil nach einem der Ansprüche 1 bis 7, **dadurch gekennzeichnet, dass** die axiale Breite der Ringzone (12) zwischen dem 0,3-fachen und dem 3-fachen Wert, bevorzugt zwischen dem 0,5-fachen und dem 2-fachen Wert des Durchmessers der Kunststoff-Isolierumhüllung (5) beträgt.

9. Elektro-Bauteil nach einem der Ansprüche 1 bis 8, **dadurch gekennzeichnet, dass** die Kunststoff-Isolierumhüllung (5) aus einem auf PVC, XPE, PA, FEP, ETFE, PP, PUR, TPE-E TPE-SEBS, PFA, E/VAC oder Abkömmlingen hiervon basierenden Material besteht.

10. Elektro-Bauteil nach einem der Ansprüche 1 bis 9, **dadurch gekennzeichnet, dass** das Isolator-Gehäuse (7) der elektrischen Funktionseinheit (3) aus einem thermoplastischen oder einem wärmehärtbaren Material besteht.

11. Elektro-Bauteil nach einem der Ansprüche 1 bis 10, **dadurch gekennzeichnet, dass** das Kabel (2, 2') einadrig ausgeführt ist.

12. Elektro-Bauteil nach einem der Ansprüche 1 bis 11, **dadurch gekennzeichnet, dass** das Kabel (2') eine Doppelisolierung aufweist, wobei eine dem Leiter (4) nächstliegende Isolierung durch einen von der Kunststoff-Isolierumhüllung (5) umgebenen Isoliermantel (27) gebildet und das Isolator-Gehäuse (7) der elektrischen Funktionseinheit (3) zusätzlich an einen aus der Kunststoff-Isolierumhüllung (5) herausragenden Abschnitt des Isoliermantels (27) angespritzt ist, wobei der Isoliermantel (27) im Bereich einer durch das Isolator-Gehäuse (7) der elektrischen Funktionseinheit (3) abgedeckten Ringzone (12") auf seiner Außenfläche umlaufend mittels einer Laserbearbeitung dergestalt strukturiert ist, dass er ein Rillenmuster (19") und zwischen den Rillen verbliebene Erhebungen (20") aufweist, wobei das Isolator-Gehäuse (7) ein bei dessen Spritzgießen durch das Rillenmuster (19") des Isoliermantels (27) geformtes und zu diesem korrespondierendes Stegmuster mit in die Rillen eintretenden und dort verankerten Stegen aufweist.

13. Elektro-Bauteil nach einem der Ansprüche 1 bis 10, **dadurch gekennzeichnet, dass** das Kabel mehradrig ausgeführt ist, wobei die Kunststoff-Isolierumhüllung mehrere jeweils von einem individuellen Isoliermantel umgebene metallische Leiter umgibt.

14. Elektro-Bauteil nach Anspruch 13, **dadurch gekennzeichnet, dass** mindestens ein Isoliermantel aus der Kunststoff-Isolierumhüllung herausragt, wobei der betreffende Isoliermantel im Bereich einer durch das Isolator-Gehäuse der elektrischen Funktionseinheit abgedeckten Ringzone auf seiner Außenfläche umlaufend mittels einer Laserbearbeitung dergestalt strukturiert ist, dass er ein Rillenmuster und zwischen den Rillen verbliebene Erhebungen aufweist, wobei das Isolator-Gehäuse ein bei dessen Spritzgießen durch das Rillenmuster des Isoliermantel geformtes und zu diesem korrespondierendes Stegmuster mit in die Rillen eintretenden und dort verankerten Stegen aufweist.

15. Verfahren zum Herstellen eines Elektro-Bauteils, mit den folgenden Schritten:
- Bereitstellen mindestens eines mindestens einen metallischen Leiter (4) und eine den mindestens einen Leiter umgebende Kunststoff-Isolierumhüllung (5) aufweisenden elektrischen Kabels (2, 2');
- Strukturieren der Kunststoff-Isolierumhüllung (5) des Kabels (2, 2') benachbart einem der Kabelenden auf ihrer Außenfläche im Bereich einer Ringzone (12) umlaufend mittels einer Laserbearbeitung dergestalt, dass sie ein Rillenmuster (13, 19, 21, 25) und zwischen den Rillen (14, 15; 17, 18; 17', 18'; 22; 24) verbliebene Erhebungen (16; 20; 20'; 23) aufweist;
- Herstellen eines Zwischenprodukts durch elektrisches Kontaktieren mindestens eines elektrischen Funktionselements (9) mit dem Ende mindestens eines Leiters (4) des Kabels (2, 2');
- Einlegen des Zwischenprodukts mit dem elektrischen Funktionselement (9) und einem sich daran anschließenden, die Ringzone (12) mit dem Rillenmuster (13, 19, 21, 25) auf der Kunststoff-Isolierumhüllung (5) aufweisenden Abschnitt des Kabels (2, 2') in ein Spritzgießwerkzeug;
- Herstellen einer unlösbar mit dem Kabel (2, 2') verbundenen elektrischen Funktionseinheit (3) durch Anspritzen eines das mindestens eine elektrische Funktionselement (9) aufnehmenden Isolator-Gehäuses (7) an das Kabelende, wobei beim Spritzgießen des Isolator-Gehäuses (7) an diesem durch das Rillenmuster (13, 19, 21, 25) der Isolier-Umhüllung (5) des Kabels (2, 2') ein zu diesem korrespondierendes Stegmuster mit dergestalt in die Rillen (14, 15; 17, 18; 17', 18'; 22; 24) eintretenden und dort verankerten Stegen geformt wird, dass das Isolator-Gehäuse (7) und die Kunststoff-Isolierumhüllung (5) in der Ringzone (12) gegenüber flüssigen Medien dauerhaft gegeneinander abgedichtet sind.

## Claims

1. An electric component (1) comprising at least one electric cable (2, 2') and an electric functional unit (3) connected to the same at the end in a non-detachable manner, the electric cable (2, 2') having at least one metallic wire (4) and a plastic insulating jacket (5) surrounding the at least one wire (4), and the electric functional unit (3) comprising an insulator housing (7), injection-moulded onto the plastic insulating jacket (5) of the cable (2, 2'), and at least one electric functional element (9) accommodated therein and contacted with the at least one wire (4), **characterized in that** the plastic insulating jacket (5) of the cable (2, 2'), in the region of an annular zone (12) covered by the insulator housing (7) of the electric functional unit (3), is structured in such a manner circumferentially on its external surface, by means of laser machining, that it has a groove pattern (13, 19, 21, 25) and elevations (16; 20; 20'; 23) remaining between the grooves (14, 15; 17, 18; 17', 18'; 22; 24), wherein the insulator housing (7) has a pattern of webs, formed during its injection moulding by the groove pattern (13, 19, 21, 25) of the insulating jacket (5) and corresponding to the same, having webs entering into the grooves (14, 15; 17, 18; 17', 18'; 22; 24) and anchored there in such a manner that the insulator housing (7) and the plastic insulating jacket (5) in the annular zone (12) are permanently sealed against liquid media with respect to one another.

2. The electric component according to Claim 1, **characterized in that** grooves (18; 18'; 24) are provided, which are annularly closed and extend over the circumference of the insulating jacket (5).

3. The electric component according to Claim 1 or Claim 2, **characterized in that** intersecting grooves (14, 15; 17, 18; 17', 18') are provided.

4. The electric component according to Claim 3, **characterized in that** the grooves (14, 15; 17, 18; 17', 18') intersect at angles between 60° and 120°.

5. The electric component according to one of Claims 1 to 4, **characterized in that** the depth of the grooves (14, 15; 17, 18; 17', 18'; 22; 24) is between 5% and 75%, preferably between 10% and 60%, particularly preferably between 15% and 45% of the average thickness of the plastic insulating jacket (5).

6. The electric component according to one of Claims 1 to 5, **characterized in that** the grooves (17', 18') are designed to have different depths.

7. The electric component according to Claim 6, **characterized in that** the average depth of the grooves (17', 18') increases in the direction of the closest end of the cable (2).

8. The electric component according to one of Claims 1 to 7, **characterized in that** the axial width of the annular zone (12) is between 0.3-times and 3-times the value, preferably between 0.5-times and 2-times the value of the diameter of the plastic insulating jacket (5).

9. The electric component according to one of Claims 1 to 8, **characterized in that** the plastic insulating jacket (5) consists of a material based on PVC, XPE, PA, FEP, ETFE, PP, PUR, TPE-E, TPE-SEBS, PFA, EVA or derivatives thereof.

10. The electric component according to one of Claims 1 to 9, **characterized in that** the insulator housing (7) of the electric functional unit (3) consists of a thermoplastic or a thermosetting material.

11. The electric component according to one of Claims 1 to 10, **characterized in that** the cable (2, 2') is designed to be single core.

12. The electric component according to one of Claims 1 to 11, **characterized in that** the cable (2') has double insulation, wherein insulation closest to the wire (4) is formed by an insulating sheath (27) surrounded by the plastic insulating jacket (5) and the insulator housing (7) of the electric functional unit (3) is additionally injection-moulded onto a section of the insulating sheath (27) protruding out of the plastic insulating jacket (5), wherein the insulating sheath (27), in the region of an annular zone (12'') covered by the insulator housing (7) of the electric functional unit (3), is structured in such a manner circumferentially on its external surface, by means of laser machining, that it has a groove pattern (19") and elevations (20") remaining between the grooves, wherein the insulator housing (7) has a pattern of webs, formed during its injection moulding by the groove pattern (19") of the insulating sheath (27) and corresponding to the same, having webs entering into the grooves and anchored there.

13. The electric component according to one of Claims 1 to 10, **characterized in that** the cable is designed to be multicore, wherein the plastic insulating jacket surrounds a plurality of metallic wires, which are surrounded by an individual insulating sheath in each case.

14. The electric component according to Claim 13, **characterized in that** at least one insulating sheath protrudes from the plastic insulating jacket, wherein the relevant insulating sheath, in the region of an annular zone covered by the insulator housing of the electric functional unit, is structured in such a manner circumferentially on its external surface, by means of laser machining, that it has a groove pattern and elevations remaining between the grooves, wherein the insulator housing has a pattern of webs, formed during its injection moulding by the groove pattern of the insulating sheath and corresponding to the same, having webs entering into the grooves and anchored there.

15. A method for producing an electric component, having the following steps:
- providing at least one electric cable (2, 2') having at least one metallic wire (4) and a plastic insulating jacket (5) surrounding the at least one wire;
- structuring the plastic insulating jacket (5) of the cable (2, 2'), adjacent to one of the cable ends, on its external surface, in the region of an annular zone (12), circumferentially by means of laser machining in such a manner, that it has a groove pattern (13, 19, 21, 25) and elevations (16; 20; 20'; 23) remaining between the grooves (14, 15; 17, 18; 17', 18'; 22; 24);
- producing an intermediate product by electrically contacting at least one electric functional element (9) with the end of at least one wire (4) of the cable (2, 2');
- inserting the intermediate product with the electric functional element (9) and an adjacent section of the cable (2, 2') having the annular zone (12) with the groove pattern (13, 19, 21, 25) on the plastic insulating jacket (5) into an injection moulding mould;
- producing a functional unit (3), which is connected to the cable (2, 2') in a non-detachable manner, by injection moulding an insulator housing (7) accommodating the at least one electric functional element (9) onto the cable end, wherein, during the injection moulding of the insulator housing (7), a pattern of webs is formed on the same by the groove pattern (13, 19, 21, 25) of the insulating jacket (5) of the cable (2, 2') and corresponding to the same, having webs entering into the grooves (14, 15; 17, 18; 17', 18'; 22; 24) and anchored there in such a manner that the insulator housing (7) and the plastic insulating jacket (5) in the annular zone (12) are permanently sealed against liquid media with respect to one another.

## Revendications

1. Composant électrique (1) comprenant au moins un câble électrique (2, 2') et une unité fonctionnelle électrique (3) indissociable reliée en bout à celui-ci, sachant que le câble électrique (2, 2') comporte au moins un conducteur métallique (4) et une gaine isolante en plastique (5) entourant au moins un conducteur métallique (4) et l'unité fonctionnelle électrique (3) comprend un boîtier d'isolateur (7) moulé par injection sur la gaine isolante en plastique (5) du câble (2, 2') et au moins un élément fonctionnel électrique (9) logé dedans, en contact avec au moins un conducteur (4), **caractérisé en ce que** la gaine isolante en plastique (5) du câble (2, 2') à proximité d'une zone annulaire (12) recouverte par le boîtier d'isolateur (7) de l'unité fonctionnelle électrique (3) est structurée périphériquement sur sa surface extérieure au moyen d'un usinage au laser de telle manière qu'elle comporte un modèle de rainures (13, 19, 21, 25) et des élévations (16 ; 20 ; 20' ; 23) restant entre les rainures (14, 15 ; 17, 18 ; 17', 18' ; 22 ; 24), sachant que le boîtier d'isolateur (7) comporte un modèle de nervures formé lors du moulage par injection de celui-ci par le modèle de rainures (13, 19, 21, 25) de la gaine isolante (5) et correspondant à celui-ci avec des nervures pénétrant dans les rainures (14, 15 ; 17, 18 ; 17', 18' ; 22 ; 24) et ancrées dans celles-ci de telle manière que le boîtier d'isolateur (7) et la gaine isolante en plastique (5) sont étanchéifiés hermétiquement l'un contre l'autre eu égard à des milieux liquides de façon permanente dans la zone annulaire (12).

2. Composant électrique selon la revendication 1, **caractérisé en ce que** des rainures (18, 18' ; 24) fermées de forme annulaire s'étendant sur la périphérie de la gaine isolante (5) sont prévues.

3. Composant électrique selon la revendication 1 ou la revendication 2, **caractérisé en ce que** des rainures (14, 15 ; 17 ; 18 ; 17', 18') s'entrecroisant sont prévues.

4. Composant électrique selon la revendication 3, **caractérisé en ce que** les rainures (14, 15 ; 17, 18 ; 17', 18') s'entrecroisent sous des angles variant entre 60° et 120°.

5. Composant électrique selon l'une quelconque des revendications 1 à 4, **caractérisé en ce que** la profondeur des rainures (14, 15 ; 17, 18 ; 17', 18' ; 22 ; 24) se situe entre 5 % et 75 %, de préférence entre 10 % et 60 %, de préférence en particulier entre 15 % et 45 % de l'épaisseur moyenne de la gaine isolante en plastique (5).

6. Composant électrique selon l'une quelconque des revendications 1 à 5, **caractérisé en ce que** les rainures (17', 18') sont exécutées avec des profondeurs différentes.

7. Composant électrique selon la revendication 6, **caractérisé en ce que** la profondeur moyenne des rainures (17', 18') augmente en direction de l'extrémité la plus proche du câble (2).

8. Composant électrique selon l'une quelconque des revendications 1 à 7, **caractérisé en ce que** la largeur axiale de la zone annulaire (12) se situe entre 0,3 fois et 3 fois, de préférence entre 0,5 fois et 2 fois la valeur du diamètre de la gaine isolante en plastique (5) .

9. Composant électrique selon l'une quelconque des revendications 1 à 8, **caractérisé en ce que** la gaine isolante en plastique (5) est composée de PCV, XPE, PA, FEP, ETFE, PP, PUR, TPE-E, TPE-SEBS, PFA, E/VAC ou d'un matériau à base de ces dérivés.

10. Composant électrique selon l'une quelconque des revendications 1 à 9, **caractérisé en ce que** le boîtier d'isolateur (7) de l'unité fonctionnelle électrique (3) est composé d'un matériau thermoplastique ou thermodurcissable.

11. Composant électrique selon l'une quelconque des revendications 1 à 10, **caractérisé en ce que** le câble (2, 2') est exécuté multiconducteur.

12. Composant électrique selon l'une quelconque des revendications 1 à 11, **caractérisé en ce que** le câble (2') comporte une isolation double, sachant qu'une isolation la plus proche du conducteur (4) est formée par une enveloppe isolante (27) entourée par la gaine isolante en plastique (5) et le boîtier d'isolateur (7) de l'unité fonctionnelle électrique (3) est moulé par injection en plus sur une section de l'enveloppe isolante (27) ressortant de la gaine isolante en plastique (5), sachant que l'enveloppe isolante (27) à proximité d'une zone annulaire (12") recouverte par le boîtier d'isolateur (7) de l'unité fonctionnelle (3) est structurée périphériquement sur sa surface extérieure au moyen d'un usinage au laser de telle manière qu'elle comporte un modèle de rainures (19") et des élévations (20") restant entre les rainures, sachant que le boîtier d'isolateur (7) comporte un modèle de nervures formé lors du moulage par injection de celui-ci par le modèle de rainure (19") de l'enveloppe isolante (27) et correspondant à celui-ci avec des nervures pénétrant dans les rainures et ancrées dans celles-ci.

13. Composant électrique selon l'une quelconque des revendications 1 à 10, **caractérisé en ce que** le câble est exécuté multiconducteur, sachant que la gaine isolante en plastique entoure plusieurs conducteurs métalliques entourés respectivement par une enveloppe isolante individuelle.

14. Composant électrique selon la revendication 13, **caractérisé en ce qu'**au moins une enveloppe isolante ressort de la gaine isolante en plastique, sachant que l'enveloppe isolante concernée à proximité d'une zone annulaire recouverte par le boîtier d'isolateur de l'unité fonctionnelle électrique est structurée périphériquement sur sa surface extérieure au moyen d'un usinage au laser de telle manière qu'elle comporte un modèle de rainures et des élévations restant entre les rainures, sachant que le boîtier d'isolateur comporte un modèle de nervures formé lors du moulage par injection de celui-ci par le modèle de rainure de l'enveloppe isolante et correspondant à celui-ci avec des nervures pénétrant dans les rainures et ancrées dans celles-ci

15. Procédé de fabrication d'un composant électrique avec les étapes suivantes :
- préparation d'au moins un câble électrique (2, 2') comportant au moins un conducteur métallique (4) et au moins une gaine isolante en plastique (5) entourant au moins un conducteur ;
- structuration de la gaine isolante en plastique (5) du câble (2, 2') voisine d »'une des extrémités de câble sur sa surface extérieure à proximité d'une zone annulaire (12) en périphérie au moyen d'un usinage au laser de telle manière qu'elle comporte un modèle de rainures (13, 19, 21, 25) et des élévations (16 ; 20 ; 20' ; 23) restant entre les rainures (14, 15 ; 17, 18 ; 17', 18' ; 22 ; 24) ;
- fabrication d'un produit intermédiaire par contact électrique d'au moins un élément fonctionnel électrique (9) avec l'extrémité d'au moins un conducteur (4) du câble (2, 2') ;
- insertion du produit intermédiaire avec l'élément fonctionnel électrique (9) et d'une section de câble (2, 2') s'y raccordant, comportant la zone annulaire (12) avec le modèle de rainures (13, 19, 21, 25) sur la gaine isolante en plastique (5) dans un outil de moulage par injection ;
- fabrication d'une unité fonctionnelle électrique (3) reliée au câble (2, 2') de façon indissociable par moulage par injection d'un boîtier d'isolateur (7) logeant au moins un élément fonctionnel électrique (9) sur l'extrémité de câble, sachant que lors du moulage par injection du boîtier d'isolateur (7), un modèle de nervures est formé sur celui-ci par le modèle de rainures (13, 19, 21, 25) de la gaine isolante (5) du câble (2, 2') correspondant à celui-ci avec des nervures pénétrant dans les rainures (14, 15 ; 17, 18 ; 17', 18' ; 22 ; 24) et ancrées dans celles-ci de telle manière que le boîtier d'isolateur (7) et la gaine isolante en plastique (5) sont étanchéifiés hermétiquement l'un contre l'autre eu égard à des milieux liquides de façon permanente dans la zone annulaire (12).
